**Europäisches Patentamt**

(19) **European Patent Office**

**Office européen des brevets**

(11) Numéro de publication: **0 014 126 B1**

(12) **FASCICULE DE BREVET EUROPEEN**

(45) Date de publication du fascicule du brevet: **18.05.83**

(51) Int. Cl.³: **F 16 F 9/02,** F 16 F 9/34, E 05 F 3/02

(21) Numéro de dépôt: **80400056.0**

(22) Date de dépôt: **15.01.80**

(54) Perfectionnements apportés aux pistons de ressorts pneumatiques ou analogues.

(30) Priorité: **16.01.79 FR 7900961**

(43) Date de publication de la demande:
**06.08.80 Bulletin 80/16**

(45) Mention de la délivrance du brevet:
**18.05.83 Bulletin 83/20**

(84) Etats contractants désignés:
**DE FR GB IT NL**

(56) Documents cités:
**EP - A - 0 002 144**
**DE - A - 2 207 720**
**DE - A - 2 734 276**
**DE - C - 705 845**
**FR - A - 1 364 607**
**FR - A - 2 198 066**
**FR - A - 2 311 967**
**FR - E - 94 270**
**US - A - 3 158 894**
**US - A - 3 937 450**

(73) Titulaire: **Société J.G. ALLINQUANT**
**119, Avenue Paul Vaillant Couturier**
**F-94250 Gentilly (FR)**

(72) Inventeur: **Bich, Réné**
**42, Rue de la Muette**
**F-78600 Maisons-Laffitte (FR)**

(74) Mandataire: **De Boisse, Louis**
**37, Avenue Franklin D. Roosevelt**
**F-75008 Paris (FR)**

Courier Press, Leamington Spa, England.

Perfectionnements apportés aux pistons de ressorts pneumatiques ou analogues

On utilise couramment dans l'industrie automobile, comme compensateurs de hayons ou de capots, des appareils télescopiques faisant office de ressorts pneumatiques et comprenant essentiellement une tige plongeuse qui pénètre de façon étanche dans un cylindre rempli de gaz sous pression et qui porte un piston de guidage et d'amortissement divisant le cylindre en deux chambres pneumatiques s'étendant de part et d'autre du piston et communiquant entre elles par un canal axial aménagé à travers le piston. Un appareil de ce type est décrit dans le brevet français 75 16 138 déposé le 23 Mai 1975 et publié sous le numéro 2 311 967, cet appareil ayant un piston monté coulissant sur la tige plongeuse entre deux butées solidaires de celle-ci et dont l'une au moins sert en même temps d'organe obturateur venant obturer partiellement le débouché du canal axial de communication des deux chambres du cylindre, lorsque le piston se trouve sur la butée correspondante.

La présente invention a pour objet un appareil télescopique de ce genre et concerne plus précisément des perfectionnements apportés à son équipage mobile — désigné ci-après sous le vocable de "dispositif de piston" — en vue d'en améliorer la tenue et les performances et aussi d'en simplifier la construction et le montage.

L'un de ces perfectionnements vise plus spécialement la conception du segment d'étanchéité qui, comme à l'accoutumée, vient frotter contre la paroi du cylindre et permet au piston d'y guider la tige plongeuse, en interdisant tout écoulement notable de fluide d'une chambre à l'autre ailleurs que par le canal axial calibré du dispositif de piston.

Dans le brevet sus-mentionné — comme d'ailleurs dans les versions usuelles se trouvant sur le marché — le segment d'étanchéité est incorporé au piston proprement dit, étant emprisonné à demeure dans un logement aménagé à cet effet dans le corps du piston, c'est-à-dire entre ses deux faces terminales.

Au contraire, selon une particularité technique de la présente invention, le segment d'étanchéité est monté extérieurement au corps du piston de façon flottante par rapport à celui-ci, les deux pièces pouvant simplement buter librement l'une contre l'autre pour se déplacer de concert, afin que ledit segment d'étanchéité coopère avec la butée limitatrice correspondante pour l'exercice de la fonction d'obturation partielle désirée.

Un autre perfectionnement de la présente invention vise le corps de piston dont le diamètre externe est légèrement inférieur au diamètre interne du cylindre de sorte que ce corps de piston ne remplit par étroitement toute la section droite du cylindre. Selon ce perfectionnement, le corps de piston est évidé et présente à cet effect une profonde échancrure annulaire qui, autorise un léger mouvement relatif de rotule dans l'appareil.

Dans un mode de réalisation de la présente invention, l'une des butées limitatrice de course du dispositif de piston sur la tige plongeuse est constituée d'une rondelle-clapet sur chacune des deux faces de laquelle est pratiquée une rainure calibrée déterminant la section de passage de fluide au débouché du canal de communication des deux chambres du cylindre, lorsque le dispositif de piston vient buter contre cette rondelle-clapet. La présence d'une telle rainure sur jaque face de celle-ci éliminant tout problème d'orientation de la pièce lors du montage.

La description qui va suivre, en regard des dessins annexés, fera bien comprendre comment l'invention peut être réalisée.

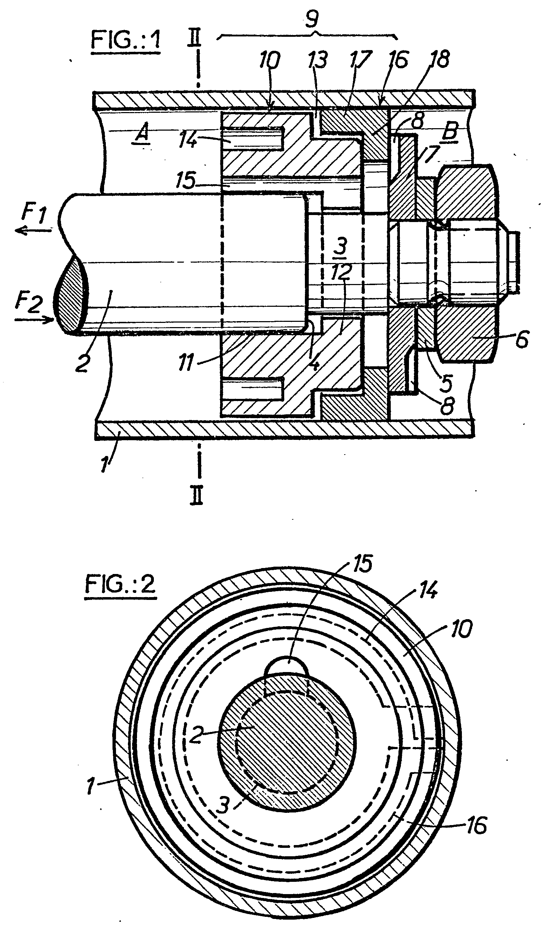

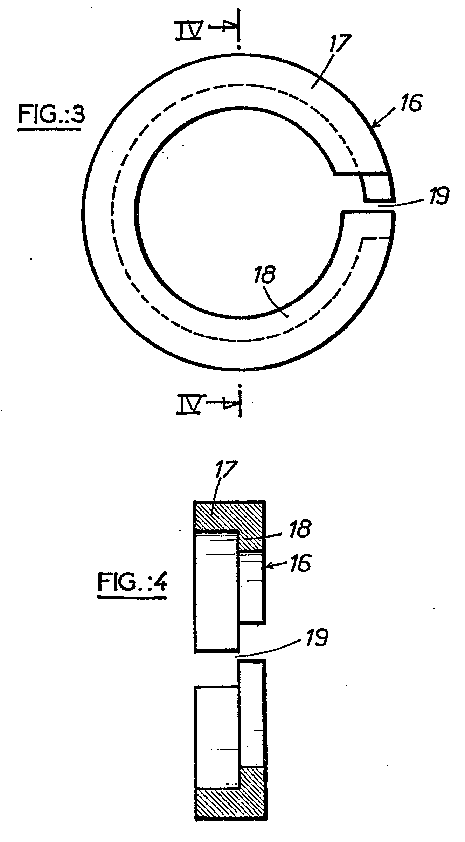

La figure 1 est une vue fragmentaire en coupe axiale d'un ressort pneumatique équipé d'un dispositif de piston perfectionné conforme à un mode de réalisation préféré de la présente invention; la figure 2 en est une vue en coupe transversale selon la ligne II—II de la figure 1; la figure 3 est une vue en élévation du segment d'étanchéité isolé du reste de l'appareil; la figure 4 est une vue en coupe diamétrale selon la ligne IV—IV de la figure 3.

Sur le dessin, on a désigné par le repère 1 le cylindre d'un ressort pneumatique formant avec une tige plongeuse 2 un système télescopique. Le cylindre 1 qui est étanche est rempli d'un gaz sous pression tel que l'azote. Lors de l'introduction de la tige plongeuse 2 à l'intérieur du cylindre 1 (sens de la flèche $F_2$ sur la figure 1), il se produit une compression supplémentaire du gaz qui agit sur l'extrémité libre interne de la tige et tend à projeter celle-ci vers l'extérieur du cylindre (sens de la flèche $F_1$).

La tige plongeuse 2 présente une extrémité interne décolletée 3 de plus faible diamètre se raccordant au tronc de tige 2 par un épaulement abrupt 4. A cette extrémité de tige est fixée, par rondelle 5 et écrou 6 ou de toute autre façon convenable, une pièce discoïdale 7 sur chaque face de laquelle est pratiquée une rainure radiale calibrée 8 et qui est appelée à faire office de clapet obturateur dans des conditions qui seront précisées plus loin.

Cette pièce 7 et l'épaulement 4 constituent deux butées limitatrices de course axiale d'un dispositif de piston 9 monté à coulissement par rapport à la tige plongeuse 2 et composé de deux éléments:

1°) D'une part, un corps de piston 10 percé d'un alésage central 11 au diamètre du tronc de tige 2 et dans lequel celui-ci est enfilé. Ce corps de piston 10 présente un rebord terminal annulaire 12 faisant saillie vers l'axe et entourant avec un très léger jeu la partie décolletée 3 de la tige plongeuse 2. Le corps de piston 10 présente par ailleurs, au droit du rebord annulaire 12, un gradin périphérique de section rectangulaire 14. Il est évidé, une profonde échancrure annulaire 14 y étant ménagée. Enfin, le corps de piston 10 est traversé de part en part par une rainure axiale 15.

2°) D'autre part, un segment d'étanchéité 16 en forme de bague fendu pour exercer un effort radial dans le sens de l'expansion de manière à assurer l'étanchéité coulissante avec la paroi du cylindre 1. Cette bague 16 est de section en équerre, ayant une portion cylindrique axiale 17 qui prend appui contre la paroi du cylindre 1 et peut s'engager avec jeu dans le gradin périphérique 13 du corps de piston 10, et une portion annulaire radiale 18 qui vient s'interposer entre le disque 7 et la face terminale voisine du corps de piston 10. On notera que le segment d'étanchéité 16 est flottant par rapport au corps de piston 10. Les portions 17 et 18 qui sont sensiblement orthogonales l'une à l'autre, comme le montre le dessin, sont respectivement fendues à des niveaux décalés dans le sens circonférentiel, ce qui donne une fente 19 à allure de "baïonnette" ou en quinconce, comme on le voit plus clairement sur les figures 3 et 4.

L'ensemble des deux pièces 10 et 16 — qui peuvent être l'une et l'autre moulées et constituées en une résine acétal (polymère de formaldéhyde) désignée sous la marque "Delrin" — forme le dispositif de piston 9 servant à la fois à guider la tige plongeuse 2 dans le cylindre 1 et à subdiviser ce dernier en deux chambres A et B communiquant par le canal de la rainure axiale 15. Le dispositif de piston 9 joue en outre un rôle d'amortisseur à caractéristiques différentes selon le sens de déplacement de la tige plongeuse 2 et par conséquent la position par rapport à celle du dispositif de piston 9, entre les deux butées limitatrices de course 4 et 7, comme expliqué dans le brevet français susmentionné auquel on pourra se reporter.

On fera brièvement observer que, dans un mouvement de détente (déplacement de la tige plongeuse 2 dans le sens de la flèche F$_1$ sur la figure 1), l'amortissement pneumatique est réalisé avec le calibrage de la rainure 8, le dispositif de piston 9 étant en butée contre le disque 7, comme représenté sur la figure 1, de sorte que la section de passage de fluide à travers le canal de communication 15 est restreinte au débouché de celui-ci et limitée à la section de la rainure calibrée 8. Par contre, dans un mouvement de compression (déplacement de la tige plongeuse 2 dans le sens de la flèche F$_2$), le dispositif de piston 9 s'écarte du disque 7 et vient buter contre l'épaulement 4 du fait du rebord annulaire 12 entourant la partie décolletée 3; la section de passage de fluide par le canal de communication n'est plus restreinte et le mouvement est donc nettement moins freiné que dans le cas précédent.

On notera que le corps de piston 10 coulisse sur le tronc de tige 2 de plus grand diamètre et non pas sur la partie décolletée 3 de plus faible diamètre, ce qui améliore la concentricité des pièces. On notera également que le fente à baïonnette 19 limite notablement la fuite occasionnée par la solution de continuité du segment d'étanchéité 16. On notera enfin que le calibrage par rainures 8—8 est effectué sur les deux faces du disque-clapet 7, ce qui évite tout problème d'orientation lors du montage.

**Revendications**

1. Dispositif de piston pour ressort pneumatique ou autre appareil télescopique à cylindre et tige plongeuse, ce dispositif de piston (9) étant agencé pour guider la tige plongeuse (2) dans le cylindre (1) et subdiviser ce dernier en deux chambres (A, B) communiquant entre elles par un canal (15) aménagé à travers le piston, lequel comporte, d'une part, un segment d'étanchéité (16) qui vient frotter contre la paroi du cylindre (1) et, d'autre part, un corps de piston (10) monté coulissant sur ladite tige plongeuse (2) entre deux butées (4, 7) solidaires de celle-ci et dont l'une (7) au moins, sert non seulement d'organe limitateur du coulissement du piston (9), mais encore d'organe obturateur venant obturer partiellement le débouché dudit canal (15) lorsque le piston (9) vient en butée contre elle, caractérisé en ce que ledit segment d'étanchéité (16) est monté extérieurement au corps de piston (10) de façon flottante par rapport à celui-ci, les deux pièces (10, 16) pouvant simplement buter librement l'une contre l'autre pour se déplacer de concert, afin que ledit segment d'étanchéité (16) coopère avec la butée limitatrice correspondante (7) pour l'exercice de la fonction d'obturation partielle désirée.

2. Dispositif de piston selon la revendication 1, dans lequel ledit corps de piston (10) a un diamètre externe légèrement inférieur au diamètre interne du cylindre (1), de sorte que ce corps de piston ne remplit pas étroitement toute la section droite du cylindre, caractérisé en ce que ledit corps de piston (10) est évidé et présente à cet effet un profonde échancrure annulaire (14) propre à autoriser un léger mouvement relatif de rotule dans l'appareil.

3. Dispositif de piston selon la revendication 1 ou 2, caractérisé en ce que l'une des butées (4, 7) limitatrices de course du dispositif de piston (9) sur la tige plongeuse (2) est contituée d'une rondelle-clapet (7) sur chacune des deux faces de laquelle est pratiquée une rainure calibrée (8—8) déterminant la section de passage de fluide au débouché du canal (15) de communication des deux chambres (A, B) du cylindre (1) lorsque le dispositif de piston (9) vient buter contre cette rondelle-clapet (7).

**Patentansprüche**

1. Kolben für eine pneumatische Feder oder einen anderen teleskopischen Apparat mit Zylinder und Tauchstange, wobei der Kolben (9) zur Führung der Tauchstange (2) im Zylinder (1) und zur Unterteilung des Zylinders in zwei Kammern (A, B) dient, die über einen den Kolben durchbrechenden Kanal (15) miteinander verbunden sind und wobei der Kolben einen an der Wand des Zylinders (1) gleitenden Dichtungsabschnitt (16) und einen Kobenkörper (10) aufweist, der auf der Tauchstange (2) zwischen zwei an dieser befindlichen Anschlägen (4, 7) gleitbar ist, von denen mindestens einer (7) nicht nur als Begrenzungsorgan für den Gleitweg des Kolbens (9) dient sondern auch als Verschlußorgan zum teilweisen Verschließen der Mündung des genannten Kanales (15), wenn der Kolben (9) an diesem Anschlag zur Anlage kommt, dadurch gekennzeichnet, daß der Dichtungsabschnitt (16) außen am Kolbenkörper (10) und relativ zu diesem bewegbar angeordnet ist und die beiden Teile (10, 16) nur frei aneinanderstoßen können, um sich gemeinsam zu verschieben, damit der Dichtungsabschnitt (16) mit dem zugeordneten Begrenzungsanschlag (7) zusammenwirkt, um das gewünschte teilweise Verschließen zu bewirken.

2. Kolben nach Anspruch 1, bei dem der Kolbenkörper (10) einen Außendurchmesser aufweist, der etwas kleiner ist als der Innendurchmesser des Zylinders (1) so daß der Kolbenkörper den Querschnitt des Zylinders nicht vollständig ausfüllt, dadurch gekennzeichnet, daß der Kolbenkörper (10) durch eine tiefe Ringnut (14) ausgehöhlt ist, der geringe kugelgelenkartige Bewegungen zuläßt.

3. Kolben nach Anspruch 1 oder 2, dadurch gekennzeichnet, daß einer der Begrenzungsanschläge (4, 7) für den Weg des Kolbens (9) auf der Tauchstange (2) aus einer Ventilscheibe (7) besteht, die auf jeder ihrer beiden Seiten eine kalibrierte Nut (8, 8) aufweist, die den Querschnitt des Fluiddurchlasses an der Mündung des Verbindungskanales (15) zwischen den beiden Kammern (A, B) des Zylinders (1) bestimmt, wenn der Kolben (9) an die Ventilscheibe (7) anstößt.

## Claims

1. Piston device for pneumatic spring or other telescopic apparatus with cylinder and plunger rod, this piston device (9) being arranged for guiding the plunger rod (2) within the cylinder (1) and subdividing the latter into two chambers (A, B) intercommunicating via a channel (15) formed through the piston, which piston comprises on the one hand a sealing ring (16) which rubs against the inner wall of the cylinder (1) and on the other hand a piston body (10) slidably fitted on said plunger rod (2) between two stops (4, 7) integral therewith and at least one of which serves not only as a sliding limitator of the piston (9) but also as an obturator partially obturating the outlet of said channel (15) when the piston (9) abuts against it, characterised in that said sealing ring (16) is mounted externally of the piston body (10) in a floating manner relatively thereto, both members (10, 16) being capable of merely abutting freely against each other in order to move in unison, so that said sealing ring (16) cooperates with the corresponding limitator stop (7) to exercise the desired partial obturation function.

2. Piston device according to claim 1, wherein said piston body (10) has an outer diameter slightly smaller than the inner diameter of the cylinder (1), whereby this piston body does not tightly fill the whole cylinder cross-section, characterised in that said piston body (10) is recessed and presents to this effect a deep annular indentation (14) adapted for allowing slight relative swivelling in the apparatus.

3. Piston device according to claim 1 or 2, characterised in that one of the stroke limiting stops (4, 7) of the piston device (9) over the plunger rod (2) is constituted by a valve ring (7) on each of the two faces of which is formed a calibered groove (8—8) defining the fluid passage area at the outlet of the channel (15) communicating the two chambers (A, B) of the cylinder (1) when the piston device (9) abuts against this valve ring (7).

FIG.:1

FIG.:2

FIG.:3

17

16

19

18

IV

IV

FIG.:4

17

18

16

19